# EUROPEAN PATENT SPECIFICATION

(11) **EP 2 515 638 B1**
(45) Date of publication and mention of the grant of the patent: **01.03.2017**
(21) Application number: 10793028.1
(22) Date of filing: 09.12.2010
(51) Int. Cl.: A01K 91/06, A01K 97/02

(54) **BAIT DISPENSER**
KÖDERSPENDER
DISTRIBUTEUR D'APPÂT

(30) Priority: 22.12.2009 GB 0922366
(43) Date of publication of application: 31.10.2012
(73) Proprietor: SPOMB Fishing Limited, Bromley Kent BR1 1RJ (GB)
(72) Inventor: Houghton, Bryan Gary, Sidcup Kent DA14 4JH (GB)
(74) Representative: Lucas, Phillip Brian
(86) International application number: PCT/GB2010/052054
(87) International publication number: WO 2011/077111

(56) References cited:
- WO-A1-2009/098507
- JP-A- 8 131 034
- JP-U- 52 163 594
- US-A- 3 163 957

## Description

The present invention relates to an angling accessory for placing ground bait at a particular location in a stretch of water when angling.

### Background to the invention

Traditionally, in order to congregate fish in a particular area in a stretch of water and to encourage them to feed, an angler has formed a ball of bait of, for example, maggots in dough and has thrown them at the spot. This has inevitably been wasteful because the dough may not itself comprise the feeding medium, the dough has to be brought, or the ingredients thereof have to be brought, to the site, and because the dough may not completely free its occupants. Also known is a cage in the form of a finned perforated cylinder attachable to a fishing line at a rear end thereof, which rear end is open while the front end comprises a rounded float. The use of such a cage or any means not employing a matrix holding the bait together risks not all the bait arriving at the intended location.

The present invention provides means for an angler to place ground bait at a desired location in a stretch of water when about to fish.

European Patent Specification 2244564 describes bait dispensers which represent a considerable advance in the art. The present invention relates to improvements to dispensers described in that patent.

Japanese Patent Publication number H8-131034 A describes a fishing bait basket having two parts hinged together at the top and a fastener openable by a pressure sensitive plate.

Japanese Patent Publication 52 - 163594 U discloses a bait dispensing float in hemispherical form and opening means.

US Patent Specification 3,163,957 discloses a substantially ball-shaped bait and/or hooked line dispensing float with an openable base.

### Summary of the invention

According to the present invention a bait dispenser for use by an angler comprises, according to claim 1, a container into which bait can be loaded, the container attachable to a line and comprising two container parts with, at a proximal rear end thereof, flight stabilisation fins of which a pair thereof hinge the two container parts together at a trailing edge thereof, a spring arranged for urging the dispenser open and catch means arranged for holding the container closed until impact with water, characterised by a stop member formed on the trailing edge of the non-hinged fins and arranged via abutment on a substantially rigid line attachment arm extending from the rear end of the container to limit the opening of the two container parts. The two container parts are preferably similar, that is, are two substantially similar halves.

The value of limiting the opening of the container to something between 35° to 55°, preferably 45°, is that while such opening should ensure that the bait is fully dispensed it also facilitates reeling the dispenser in again in a controlled manner, avoiding line knotting and entanglement and minimising water retention by the dispenser. Thus is enabled a relatively smooth, rather than turbulent, reeling in operation, with the dispenser aquaplaning over the surface of the water. This is assisted by the fact that by virtue of the invention the dispenser container parts are held open somewhat rigidly at the predetermined angle by the spring urging them outwards and the stop member preventing further opening. This enablement of smooth reeling in also means that the reeling in operation can be effected rapidly, thus minimising the time between dispensing ground bait and casting the definitive line, which can be particularly important when fishing in moving water.

In addition to the incorporation of the stop members it has been discovered that incorporating a relatively rigid arm extending from the rear of the container to an attachment member for attachment to the angler's line can assist in the smooth reeling in of the dispenser. This arm with attachment member may be of the order of 40-100mm, preferably 50 to 100mm long. By being attached to the hinge may advantageously have a greater freedom of angular movement about the hinge than in the plane occupied by the hinge. Typically the angular freedom about the hinge may be 40°, but no more than 10° in the plane occupied by the hinge.

It will be appreciated at this juncture that the preferred mode of use of a dispenser in accordance with the invention is in an angling operation comprising the following steps:
1. Cast a marker float at the point upon the water where one has determined to fish;
2. Cast one or more rods carrying the definitive baited hooks in the region of the marker float;
3. Cast the loaded dispenser in the region of the marker float, to burst open upon impact with the water and spill out the bait in that region, then reel in the open dispenser;
4. Wait for the fish to bite!

However, in situations where the definitive bait is liable to detach from the hook prior to arrival at the designated fishing location, the baited hook may be arranged for containment within the bait dispenser, so that dispersal of ground bait and deployment of the baited hook can occur simultaneously. For such situations the bait dispenser may be arranged, perhaps by means of a flotation chamber, built in or detachably fitted, to act as a float for indicating that there has been a bite. In that case the attachment arm may be constructed and coloured as a float.

In preferred embodiments of the invention the dispenser has an aerodynamic, teardrop, airship or barrage balloon shape, and a spring-loaded plunger mounted on one body half sited at a bow end thereof and incorporating a catch arranged to engage a detent on the other body half, whereby upon the dispenser striking water the plunger is driven to release the catch from the detent.

The detent/catch construction is preferably such that only a very light force is required for opening such, in other words, that the dispenser remains closed during the casting operation but bursts open upon impact with the water even if the plunger itself scarcely makes contact with the water, if at all. In other words, it may be possible to do without a plunger and rely on hair spring operation to open the dispenser merely from the shock force generated by impact with the water. Differentiation between pre- and during casting situations and the water impact situation can be assisted by the two parts of the body being arranged to be separated slightly, for example by 0.1 to 0.5mm in the closed configuration when at rest and during casting, so that upon impact with the water the two parts will also impact upon each other.

In a particularly suitable construction one container half carries a bulkhead upon which is mounted a plunger holder carrying a spring-loaded plunger, the plunger carrying a catch arranged to engage on a detent formed on the other container half, and the two container halves being formed with a mouth to which the plunger forms a continuum at the leading or bow end of the dispenser. Advantageously the bulkhead, which may be reinforced by brackets, also serves to assist in retaining the shape of the container half upon which it is formed and, being formed to be substantially contiguous with the interior of the other container half throughout the inner circumference thereof, serves to some extent to retain the shape of the other container half whilst, of course, restraining the ground bait from clogging operation of the plunger.

There are fins at the rear or tail end of the dispenser, appropriate ones of which are hinged together for the opening of the dispenser.

The stop member may comprise a cooperating pair of members formed one at the rear of each of the two container parts. These are formed on the trailing edge of fins transverse to those upon which the hinge may be formed. They are also arranged to abut the relatively rigid attachment arm mentioned above and thereby to limit opening of the dispenser.

The means for enabling the container to open upon impact, for example the plunger and detent means, may be adjustable to cater for different impact situations or wear and spring relaxation. The plunger may be rotatable between two or more detent locations of differing heights, even a variable detent. To this end the plunger may incorporate a feature such as a slot or a ridge facilitating its being turned. In fact the means may be adjustable to and from a configuration in which the dispenser is locked against opening, for example during transportation.

Where a spring-loaded plunger is employed the spring may be arranged to react against a top-hat member which is detachable from the dispenser to enable demounting of the spring and plunger for cleaning, replacement or adjustment purposes.

According to alternative embodiments of the invention the container may have catch means associated with a weight whereby the catch means holds the container closed but upon impact with the water, continued travel by the weight frees the catch from the container and allows the container to open. The catch means and the weight may be attached to a fishing line so that while casting the catch holds the container closed. To this end, or as an alternative to attaching the catch to the line, the catch may include some means of slight positive engagement with the container, for example by detent or magnet. Alternatively the catch means and the weight may be held in the closed configuration by spring means such as an elastic member. Another way of keeping the catch engaged until opening is desired is for the line, or extension thereof, to pass around a loop attached to the catch and then be anchored, perhaps adjacent the proximal end of a container member, thus doubling the mechanical advantage employed by the line in holding the catch in the closure position.

If the shape of the containers is such that under casting force the bait might tend to urge the container open the catch means may be adapted to resist this. The catch means may be arranged to be adjustable to cater for different bait loadings for example. Thus screw means may be incorporated, perhaps with an associated visual scale, for adjusting the strength of the catch. This may for example adjust the loading of a spring or the configuration of one magnet in relation to another.

Among the means for achieving bursting open of the container upon impact with the water are fins, suitably disposed flotation devices or chambers, spring means and making the container or part thereof of a rapidly soluble material. Any one or combination of these may be suitable for a given form of fishing. Where fins are used these may be splayed outwards at an acute angle and arranged so that faces thereof impact the water and thus drive the container members apart. The fins may, if there is to be a catch in the region thereof, straddle the catch and may lightly retain the catch in place by means of friction.

Typically the angle of the fin to the container longitudinal axis may be 25° - 55°, with 45° perhaps being optimum. The fins may be interchangeable or their size and shape adjustable to suit various lines and conditions.

The fin principle may be constituted or assisted by an appropriate reverse slope to the container members' ends. This may not be desired if it were to impede full discharge of the container contents. However, an adjacent volume of the container might be required for ballast or flotation purposes. Indeed a compartment may be formed at the distal end of one or more of the container members, in which may be placed ballast or flotation material as required. The container may accordingly be constructed to act as a float after opening, by incorporating a flotation chamber, including foam perhaps, at the distal end of one member and perhaps suitable ballast means at the distal end of another or the other member.

It may be preferred that charging the container with bait occurs after the compartment members have been locked together, or at least is completed thereafter. To this end one of the container members may incorporate filler means. Typically the filler means may comprise an opening in the container member coverable by a sliding lid. Preferably the sliding lid slides open towards the proximal end of the container, so that casting the dispenser tends to hold the lid closed.

In the context of angling suitable dimensions for the dispenser are up to 30cm long with an aspect ratio between 2:1 and about 6:1. A preferred embodiment is 17cm long and 6.5cm broad. It will be appreciated that dispensers in accordance with the invention are usually circular in cross section, about the longitudinal axis.

The container members may be manufactured of a plastics material in a mould. Typically the container body parts may be made of polypropylene and the spring of spring steel. The plunger may be formed from acetal which, whilst being stiff, has also an enhanced resistance to degradation in water.

Preferably, from the point of view of strength and durability the hinge comprises tunnels formed at fin trailing edges and a shaft through the tunnels. The shaft may then support the line attachment member and the container opening spring, though it may facilitate assembly if the line attachment member is linked to the container opening spring, and each fin hinge is discrete.

Colour of the dispenser can be important. In warmer climes it may not be appropriate for the dispenser to be black when it may distort or too hot to touch, though black or other dark colour, for example green, blue or red may be suitable elsewhere. In warm environments white or a pale colour may be preferred.

### Brief Description of the Drawings

Dispensers in accordance with the present invention will now be described by way of example with reference to the accompanying figures, of which:
- Figure 1: is a side elevation of a ground bait dispenser in a closed configuration;
- Figure 2: is a side elevation of a ground bait dispenser in an open configuration;
- Figure 3: depicts the spring for driving the dispenser open;
- Figure 4: depicts the line attachment bar;
- Figure 5: is a sectional view of the bow end of the dispenser;
- Figure 6: is an exploded view of the bow end of the dispenser;
- Figure 7: is a view of a dispenser incorporating a float;
- Figure 8: is a view of a plunger holder and fulcrum facility within one of the body members;
- Figure 9: is a view of the detent facility within the other body member;
- Figure 10a: is a side view of a plunger holder;
- Figure 10b: is a plan view of a plunger holder; and
- Figures 11 a and 11b: depict a dispenser locking facility.

### Description of the Preferred Embodiments

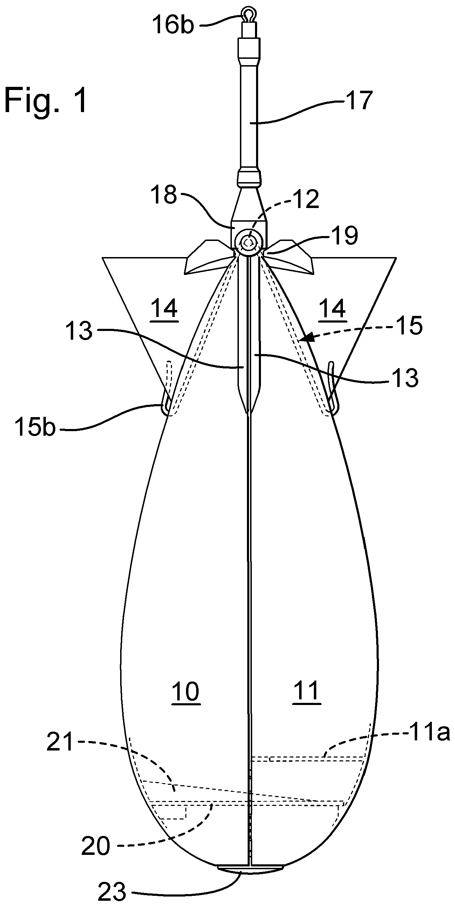

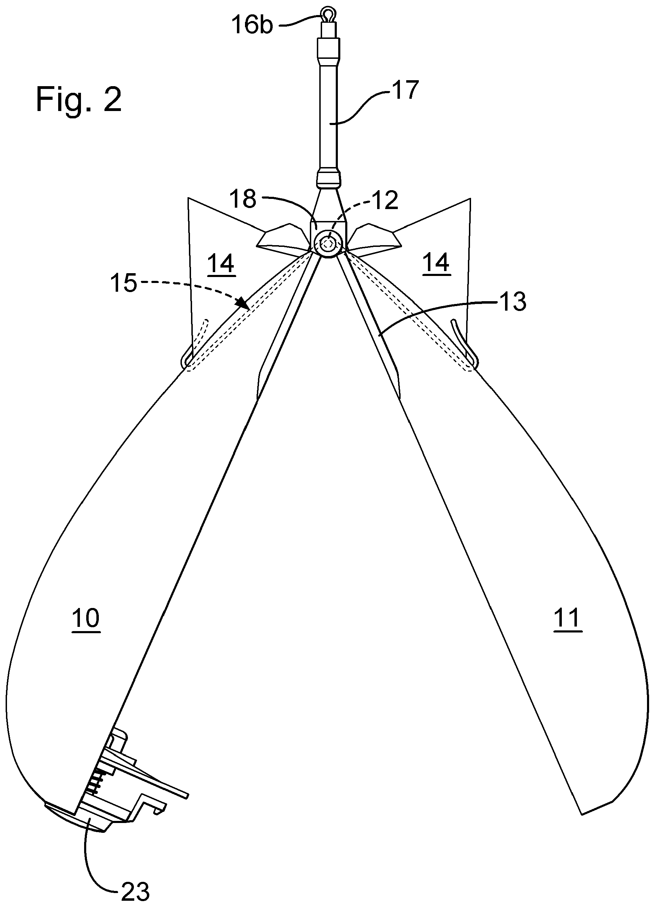

As shown in figures 1 to 6 and 6, 9, and 10 the dispenser comprises a teardrop-shaped container comprising two container halves 10, 11 attached one to the other at a proximal or rear end by a hinge 12 formed on stabiliser fin halves 13 and mating to define a bait containing hollow. Each container half 10, 11 carries further stabiliser fins 14, transverse to the fins 13.

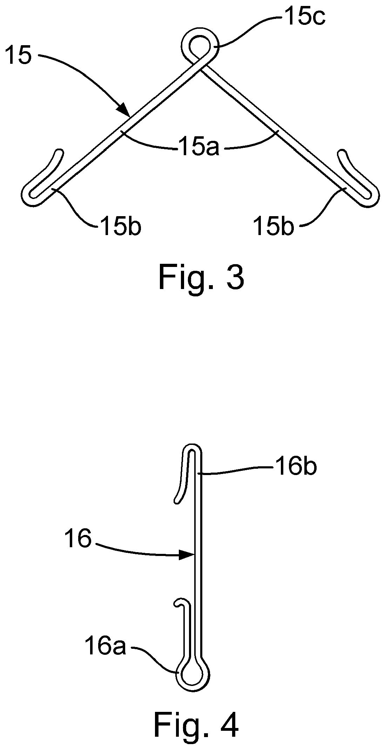

A spring 15 is fitted at the rear end of the container, formed to urge open the container halves 10, 11. As shown in figure 3 the spring 15 comprises two arms 15a hooked at their outer ends 15b to engage the container halves 10, 11, and coiled at the inner end to form an attachment ring 15c.

The line attachment bar 16 illustrated in figure 4 has a spring engagement hook 16a at its forward end and a line engagement hook 16b at its rear end.

Rubber sheath members 17, 18 sheath the spring attachment ring 15c and the bar 16, the sheath member 17 being deformable to expose the hook 16b for attachment to a line and upon release to cover the attachment to the line thus retaining the attachment.

The trailing edge of the fins 14 each carry a stop member 19 formed to abut the sheath 18 upon the container opening and thus impede opening beyond about 100°.

As shown in figure 1, at rest in the closed configuration the two halves 10 and 11 are separated by about 0.2mm. This assists in maintaining the dispenser closed by virtue of increases contact surface area and pressure between the detent and the plunger.

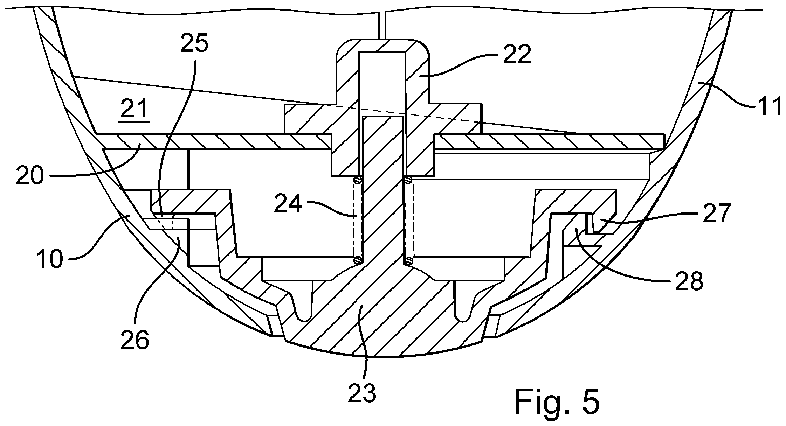

The opening of this dispenser is effected by the impact of a plunger with the water after casting. Thus as shown in figure 5 at the distal, or bow end of the container, the body half 10 carries a bulkhead 20 reinforced by brackets 21 and upon which is centrally mounted a plunger holder 22. The plunger holder 22 carries a plunger 23 arranged to be urged forward by a spring 24. The plunger 23 has a flange 25 which is arranged to pivot on a shoulder 26 on the container half 10 and a latch 27 arranged for engagement with a detent 28 formed on the container half 11.

As shown the distal, bow or lead end of the two container halves 10, 11 are formed with a mouth to which the plunger 23 forms a continuum.

In use of this embodiment of the invention the body half 11 of the open bait dispenser is heaped with bait and the two body halves 10, 11 are then snapped shut. That is to say, the hinge 12 is closed against the force of the spring 15 and the latch 27 engaged on the detent 28 to hold the dispenser closed. If not already attached the dispenser is attached to a fishing line via the line link 16b, the sheath 17 having been pushed forward at the rear end thereof.

When the line is then cast, upon striking the water the two body halves 10, 11 move together whilst, simultaneously, the plunger 23 is pushed into the body halves 10, 11 against the spring 24, releasing the latch 27 from the detent 28. The spring 15 then urges the container halves 10, 11 apart to allow the bait to fall from the dispenser. The container is impeded from opening beyond about 45° by the stops 19 having abutted the sheath 18. That having happened the angler may then reel the open dispenser in. The 45° open configuration of the dispenser, and the length of the line attachment arm co-operate to ensure a low drag, relatively non-turbulent reeling in process thus minimising line entanglement.

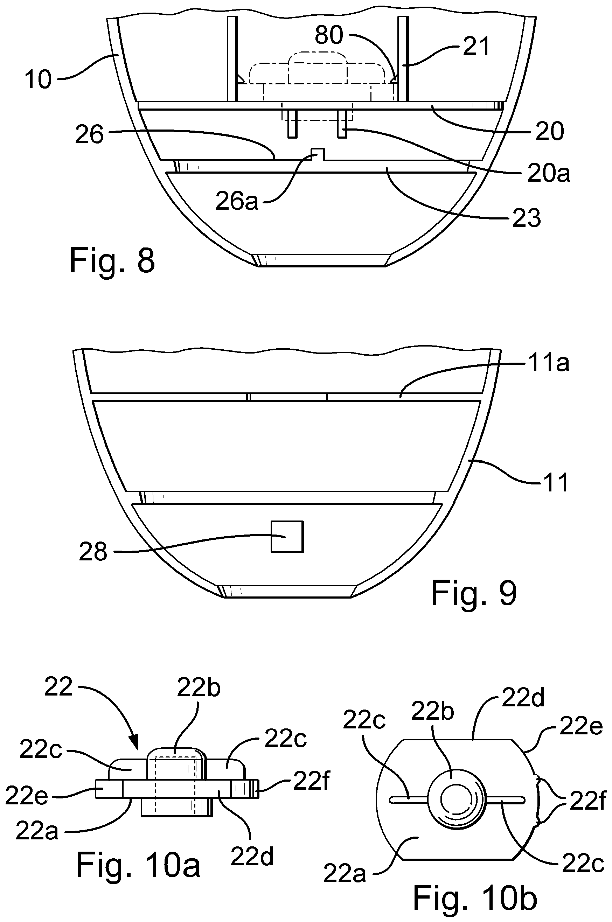

Detail of the plunger holder 22 is shown in figures 10a, 10b. The plunger holder 22 comprises a flange 22a which abuts the bulkhead 20, a hollow plunger shaft receiving boss 22b and finger grips 22c. The flange 22a has two opposing flat edges 22d and two rounded opposing edges 22e. One of the rounded edges 22e carries two stops 22f constructed to impede unwanted rotation of the plunger holder 22.

Figure 8 shows the arrangement by which the plunger holder 22 is detachably held to the bulkhead 20. The brackets 21 carry flanges 80 under which the rounded edges 22e of the plunger holder 22 can be captured, but not the flat edges 22d. Thus, turning the plunger holder 22 alternately captures and releases the plunger holder 22. The release of the plunger holder 22 frees both the spring 24 and the plunger 23 from the body half 10.

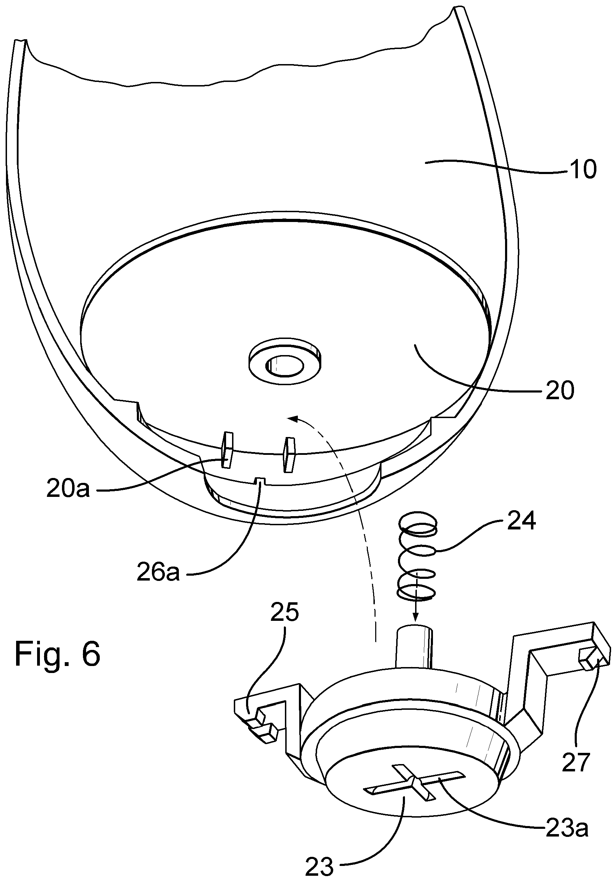

It will be noted that, as shown in figure 6, the arms of the plunger 23 differ one with respect to the other. The flange 25 comprises two teeth with a valley 25a between whilst the latch 27 comprises a single tooth. Figure 8 shows a protruberence 26a from the shoulder 26 for receiving the valley 25a and guides 20a depending from the bulkhead 20 for receiving the appropriate arm of the plunger 23 The forward face of the plunger 23 has a cruciform indentation 23a by which the plunger may be rotated by the user. It will be appreciated that the angles of the face of the latch 27 and the detent 28, and the areas and textures thereof will have been determined, in consort with the spring stiffness etc., such that the required sensitivity of the release mechanism can be obtained. However, notwithstanding these particular arrangements, the plunger 23 is formed so that if it is rotated through 180°, opening of the dispenser will be a little more difficult. Figure 9 shows the location of the detent 28 in the body half 11. It also shows a bracket 11 a (also shown in figure 1), which serves to maintain the shape of the dispenser half 11 and also to impede access by bait to the working parts of the dispenser.

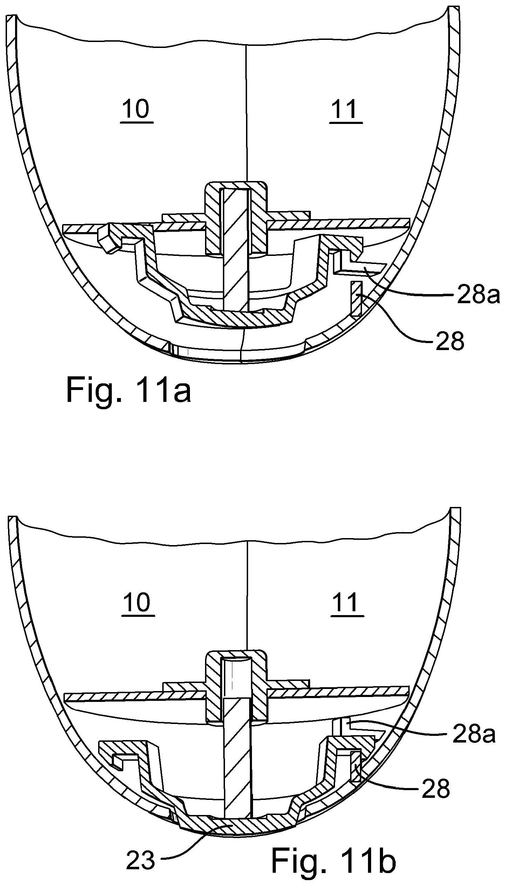

Figures 11a, 11b illustrate an alternative construction in the embodiment described with reference to figures 1 to 6 and 8 - 10, namely two different detents 28 and 28a, each set at a slightly different angle around the dispenser axis. The detent 28 is for opening the dispenser upon impact during use. The detent 28a, which may be alternatively engaged by the plunger latch 27 following turning the plunger 23 through a few degrees, serves to maintain the dispenser closed during transportation.

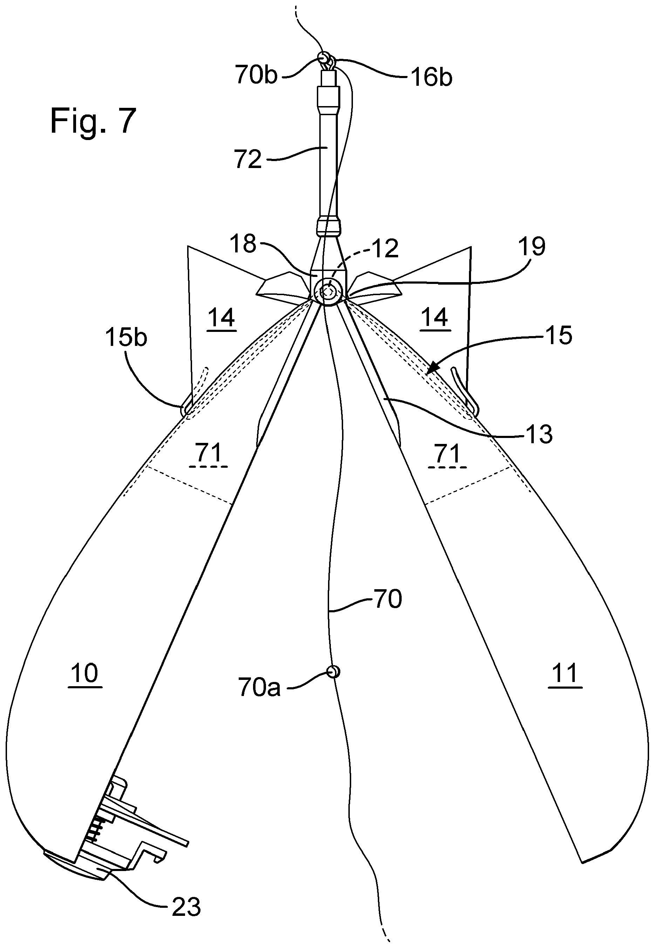

Figure 7 illustrates an alternative dispenser, constructed to act as a float and to remain associated with a definitive baited fishing line 70. Parts similar to those illustrated in the other figures have similar reference numbers. The two halves 10, 11 have flotation chambers 71 at the top end thereof and the relatively rigid link arm between the halves 10, 11 is a float 72. The line 70 carries two stops, one (70a) of which is downstream of the eye 16b and the other (70b) is upstream thereof. The stop 70a abuts the eye 16b during casting and the stop 70b abuts the eye 16b after hook deployment. The eye 16b may in this embodiment, if it is not desired for it to be hooked and associated with a retractable rubber sheath, be formed as a spring. This embodiment is particularly useful when employing a bait which might easily detach from the line during deployment. In that circumstance the hooked part of the line may be stowed in the dispenser during casting.

The float 72 may for this embodiment be constructed, for example moulded in one piece, of a buoyant plastics material. In an alternative version of this embodiment the line attachment eye 16b may not be at the outer tip of the float 72 but intermediate its length or even at the base thereof.

Typically the bait dispenser of the embodiments described above is 17cm long and 6.5cm maximum breadth. Accordingly figure 1 shows the dispenser approximately full size, with the line attachment arm approximately 6.5cm long. This bait dispenser is moulded in polypropylene, the plunger is formed of acetal and the spring 15 and the arm 17 are formed of spring steel. Another embodiment is about 11 cm long and 4cm broad.

The typical use procedure is as follows:
1. Cast a marker float at the point upon the water where one has determined to fish;
2. Cast one or more rods carrying the definitive baited hooks in the region of the marker float;
3. Cast the loaded dispenser in the region of the marker float, to burst open upon impact with the water and spill out the bait in that region, then reel in the open dispenser;
4. Wait for the fish to bite!

It will be typical when employing the 17cm dispenser in this way to use a rod having a test curve (t-c) of 4-5lb (2-2.5kg). For a dispenser 10 - 11 cm long a rod of t-c 3lb (1.5Kg) might be used.

In an alternative embodiment the dispenser does not have a plunger and the catch member and its associated spring and detent are arranged to open upon sensing the shock wave generated by impact of the dispenser upon the water. In other words it may then not be necessary for the dispenser to land nose first on the water for a so-called vibration trip to open it.

It has been observed that with a spring 24 of force of 1.0 to 1.5 Newtons, a latch 27 depth of 1.5mm, will generally require the use of a plunger 23. A latch 27 depth of 1 mm coupled with a spring 24 of force 1.0 Newton will permit the dispenser to open on a vibration trip basis.

A dispenser employing vibration trip to open may well be constructed with the catch/detent at the rear thereof and have no plunger etc at the bow end. Such a construction may have improved evacuation of the bait from the dispenser.

Any of the embodiments above described may incorporate a filler hatch wherethrough bait may be loaded with the container parts closed. The hatch may be closed by a sliding or hinged door.

## Claims

1. A bait dispenser for use by an angler and comprising a container into which bait can be loaded, the container attachable to a line and comprising two container parts (10, 11) with at a proximal, rear end thereof, flight stabilisation fins (13, 14), of which a pair thereof (13) hinge the container at the trailing edge thereof, a spring (15) arranged for urging the dispenser open, catch means (27, 28) arranged for holding the container closed until impact with water, the bait dispenser being **characterized by** a substantially rigid line attachment arm (16) at the rear end thereof and further **characterized by** a stop member (19) formed on the trailing edge of another pair of said fins (14) and arranged via abutment on the line attachment arm (16) to limit the opening of the two container parts (10, 11).

2. A bait dispenser as claimed in claim 1 and wherein the two container parts (10, 11) are similar, that is, are two substantially similar halves.

3. A bait dispenser as claimed in any one of the preceding claims and having an aerodynamic, teardrop shape.

4. A bait dispenser as claimed in any one of the preceding claims and wherein the stop member limits the opening of the container to between 35° to 100° opening angle.

5. A bait dispenser as claimed in any one of the preceding claims and wherein the line attachment arm (16) is between 5 and 10cm long.

6. A bait dispenser as claimed in any one of the preceding claims and wherein the line attachment arm (16) comprises a resilient sheath withdrawable for attachment to a fishing line and disposed to cover and protect said attachment.

7. A bait dispenser as claimed in any one of the preceding claims and wherein the distal, bow or lead end of the two container parts (10, 11) are formed with a mouth to which a plunger (23) forms a continuum, the plunger (23) forming part of the catch means.

8. A bait dispenser as claimed in claim 7 and wherein the plunger has means whereby it may be rotated with respect to the container parts, the plunger having a pair of arms, a fulcrum member (25) on one arm and a latch (27) on the other arm.

9. A bait dispenser as claimed in claim 8 and wherein the fulcrum member (25) comprises two teeth with a valley therebetween, the latch member (27) comprises a single tooth, one container part having a fulcrum member retaining facility and the other container part having a detent (28, 28a) for the latch.

10. A bait dispenser as claimed in any one of claims 7 to 9 and having a plunger retainer member (22) detachably mounted to a container part (10).

11. A bait dispenser as claimed in claim 10 and wherein a container part (10) carries a bulkhead upon which the plunger retainer member (22) is mounted and brackets (21) reinforcing the bulkhead, the brackets incorporating holding means holding the plunger retainer member (22).

12. A bait dispenser as claimed in any one of claims 7 to 11 and wherein the plunger is rotatable to a configuration in which the dispenser is locked closed.

13. A bait dispenser as claimed in any one of the preceding claims and wherein the container is constructed to act as a float after water impact.

14. A bait dispenser as claimed in any one of the preceding claims and having dimensions of the order of 10 to 20cm by 3 to 10cm.

15. A bait dispenser as claimed in any one of the preceding claims and wherein the container parts (10, 11) are formed of polypropylene and the plunger (23) of acetal.

## Patentansprüche

1. Köderspender zur Verwendung durch einen Angler, umfassend einen Behälter, in den eine Beute geladen werden kann, wobei der Behälter an einer Schnur befestigbar ist und zwei Behälterteile (10, 11), die an einem proximalen, hinteren Ende mit Flugstabilisierungsflossen (13, 14), wobei ein Paar (13) der Flugstabilisierungsflossen den Behälter an der Rückkante der Flugstabilisierungsflossen klappbar zusammenhält, versehen sind, eine Feder (15), die angeordnet ist, den Spender in die offene Position zu drängen, und Fangmittel (27, 28) umfasst, die angeordnet sind, den Behälter bis zum Aufprall mit dem Wasser geschlossen zu halten,
wobei der Köderspender durch einen im Wesentlichen starren Schnurbefestigungsarm (16) an seinem hinteren Ende gekennzeichnet ist und ferner durch ein Stoppelement (19) gekennzeichnet ist, das an der Rückkante von einem weiteren Paar der Finnen (14) ausgebildet ist und mittels eines Widerlagers an dem Schnurbefestigungsarm (16) angeordnet ist, um das Öffnen der zwei Behälterteile (10, 11) zu begrenzen.

2. Köderspender nach Anspruch 1, wobei die zwei Behälterteile (10, 11) ähnlich sind, dass heißt, dass sie zwei im Wesentlichen ähnliche Hälften sind.

3. Köderspender nach einem der vorhergehenden Ansprüche, der eine aerodynamische Tropfenform aufweist.

4. Köderspender nach einem der vorhergehenden Ansprüche, wobei das Stoppelement das Öffnen des Behälters auf einen Öffnungswinkel zwischen 35° bis 100°begrenzt.

5. Köderspender nach einem der vorhergehenden Ansprüche, wobei der Schnurbefestigungsarm (16) zwischen 5 und 10 cm lang ist.

6. Köderspender nach einem der vorhergehenden Ansprüche, wobei der Schnurbefestigungsarm (16) eine elastische Hülle umfasst, die zur Befestigung an eine Angelschnur abziehbar ist und angeordnet ist, die Befestigung abzudecken und zu schützen.

7. Köderspender nach einem der vorhergehenden Ansprüche, wobei das distale, gebogene oder vordere Ende der zwei Behälterteile (10, 11) mit einem Mund ausgestaltet sind, mit dem ein Druckstück (23) ein Kontinuum ausbildet, wobei das Druckstück (23) einen Teil von dem Fangmittel bildet.

8. Köderspender nach Anspruch 7, wobei das Druckstück Mittel aufweist, durch die es in Bezug auf die Behälterteile gedreht werden kann, wobei das Druckstück ein Armpaar, an dem einen Arm ein Angelpunktelement (25) und an dem anderen Arm eine Sperre (27) aufweist.

9. Köderspender nach Anspruch 8, wobei das Angelpunktelement (25) zwei Zähne mit einer Vertiefung dazwischen umfasst, das Sperrelement (27) einen einzigen Zahn umfasst, ein Behälterteil eine Angelpunktelementzurückhaltevorrichtung aufweist und der andere Behälterteil eine Arretierung (28, 28a) für die Sperre aufweist.

10. Köderspender nach einem der Ansprüche 7 bis 9, der ein Druckstückzurückhalteelement (22) aufweist, das entfernbar an einem Behälterteil (10) befestigt ist.

11. Köderspender nach Anspruch 10, wobei ein Behälterteil (10) eine Stützwand trägt, auf der das Druckstückzurückhalteelement (22) befestigt ist und wobei Winkel (21) die Stützwand verstärken, wobei die Winkel Haltemittel umfassen, die das Druckstückzurückhalteelement (22) halten.

12. Köderspender nach einem der Ansprüche 7 bis 11, wobei das Druckstück in eine Konfiguration drehbar ist, in der der Spender verriegelt geschlossen ist.

13. Köderspender nach einem der vorhergehenden Ansprüche, wobei der Behälter konstruiert ist, nach dem Wasseraufprall als ein Floß zu wirken.

14. Köderspender nach einem der vorhergehenden Ansprüche, der Abmessungen in der Größenordnung von 10 bis 20 cm auf 3 bis 10 cm aufweist.

15. Köderspender nach einem der vorhergehenden Ansprüche, wobei die Behälterteile (10, 11) aus Polypropylen und das Druckstück (23) aus Acetal gebildet ist.

## Revendications

1. Distributeur d'appât pour une utilisation par un pêcheur et comprenant un contenant dans lequel peuvent être chargés de l'appât, le contenant pouvant être attaché à une ligne et comprenant deux parties de contenant (10, 11) avec, à une extrémité arrière proximale de celles-ci, des ailettes de stabilisation de vol (13, 14), dont une paire (13) articule le contenant au niveau de son bord de fuite, un ressort (15) agencé pour pousser le distributeur à s'ouvrir, des moyens d'accroche (27, 28) agencés pour tenir le contenant fermé jusqu'à l'impact avec l'eau, le distributeur de l'appât étant **caractérisé par** un bras d'attache de ligne sensiblement rigide (16) à l'extrémité arrière de celui-ci et en outre **caractérisé par** un organe d'arrêt (19) formé sur le bord de fuite d'une autre paire desdites ailettes (14) et agencé par aboutement sur le bras d'attache de ligne (16) afin de limiter l'ouverture des deux parties de contenant (10, 11).

2. Distributeur d'appât selon la revendication 1 et dans lequel les deux parties de contenant (10, 11) sont similaires, c'est-à-dire qu'elles sont deux moitiés sensiblement similaires.

3. Distributeur d'appât selon l'une quelconque des revendications précédentes et ayant une forme aérodynamique de larme.

4. Distributeur d'appât selon l'une quelconque des revendications précédentes et dans lequel l'organe d'arrêt limite l'ouverture du contenant à un angle d'ouverture compris entre 35° et 100°.

5. Distributeur d'appât selon l'une quelconque des revendications précédentes et dans lequel le bras d'attache de ligne (16) a une longueur comprise entre 5 et 10 cm.

6. Distributeur d'appât selon l'une quelconque des revendications précédentes et dans lequel le bras d'attache de ligne (16) comprend une gaine flexible pouvant être retirée pour une attache à une ligne de pêche et disposée pour couvrir et protéger ladite attache.

7. Distributeur d'appât selon l'une quelconque des revendications précédentes et dans lequel l'extrémité distale, avant ou d'attaque des deux parties de contenant (10, 11) sont formées avec un goulot avec lequel un poussoir (23) forme un continuum, le poussoir (23) faisant partie des moyens d'accroche.

8. Distributeur d'appât selon la revendication 7 et dans lequel le poussoir comporte des moyens lui permettant d'être mis en rotation par rapport aux parties de contenant, le poussoir ayant une paire de bras, un organe d'appui (25) sur un bras et un loquet (27) sur l'autre bras.

9. Distributeur d'appât selon la revendication 8 et dans lequel l'organe d' appui (25) comprend deux dents avec une dépression entre elles, l'organe de loquet(27) comprend une seule dent, une partie de contenant ayant un accessoire de retenue d'organe d'appui et l'autre partie de contenant ayant un cran (28, 28a) pour le loquet.

10. Distributeur d'appât selon l'une quelconque des revendications 7 à 9 et ayant un organe de retenue de poussoir (22) monté détachable sur une partie de contenant (10).

11. Distributeur d'appât selon la revendication 10 et dans lequel une partie de contenant (10) soutient une cloison sur laquelle est monté l'organe de retenue de poussoir (22) et des supports (21) renforçant la cloison, les supports incorporant des moyens de tenue tenant l'organe de retenue de poussoir (22).

12. Distributeur d'appât selon l'une quelconque des revendications 7 à 11 et dans lequel le poussoir peut être mis en rotation vers une configuration dans laquelle le distributeur est fermé verrouillé.

13. Distributeur d'appât selon l'une quelconque des revendications précédentes et dans lequel le contenant est conçu pour agir comme un flotteur après impact avec l'eau.

14. Distributeur d'appât selon l'une quelconque des revendications précédentes et ayant des dimensions de l'ordre de 10 à 20 cm par 3 à 10 cm.

15. Distributeur d'appât selon l'une quelconque des revendications précédentes et dans lequel les parties de contenant (10, 11) sont formées de polypropylène et le poussoir (23) d'acétal.
